# EUROPEAN PATENT APPLICATION

(11) **EP 4 241 551 A1**
(43) Date of publication of application: **13.09.2023**
(21) Application number: 23161084.1
(22) Date of filing: 09.03.2023
(51) Int. Cl.: A01C 23/00

(54) **A CORE ELEMENT FOR A CHOPPER OF A MANURE DISTRIBUTOR, THE RESPECTIVE CHOPPER AND MANURE DISTRIBUTOR**

(30) Priority: 09.03.2022 SI 202200032
(71) Applicant: BeTEC d.o.o., 3230 Sentjur (SI)
(72) Inventor: Brecko, Darko, 3230 Sentjur (SI); Brecko, Jure, 3230 Sentjur (SI); Stojan, Tomaz, 1433 Radece (SI)
(74) Representative: Patentni Biro AF d.o.o.

(57) **Abstract**

The disclosure relates to a core element (1) for a chopper (100) of a manure distributor, wherein the size of the core (1, 103) can be adjusted along its width. The core has two parts (11, 12) equipped with suitably shaped corresponding parts (11a, 12a), so that the first part (11) can be inserted in the second part (12), thus compressing the core (1), or the first part (11) is pulled from the second part (12), thus widening the core (1). During pulling the first part (11) from the second part (12) requires overcoming the force of springs (13), which are installed between the cutting elements (14) and holders of cutting elements, and that support each of the cutting elements on the outer side of the core.

## Description

### Field of the invention

The present invention belongs to the field of agricultural devices, more precisely to the field of specially designed devices for distributing liquid manure or similar fertilizers, including ammonia. The present invention relates to a core for a chopper of a fertilizer distributor, a chopper, and a fertilizer with said core.

### Background of the invention and the technical problem

Fertilizer distributors are systems intended for use in fertilizing fields, as manure or other fertilizers are led from a cistern directly into soil via specially designed pipes installed on a wide frame. Ends of said pipes are provided with an end piece arranged to cut into the soil surface, thus ensuring ventilation of soil as well as application of manure. Usually the frame has three parts, i.e., a central part and two side parts, so that the frame can be lifted and moved into a transport position, in which both side parts are swung to the sides of the cistern or folded behind the cistern. The system may be connected on a tractor or any other suitable vehicle arranged for use with manure spreaders/distributors. In the construction of the distributor a manure chopper is provided, which ensures that the manure supplied from the main inlet is divided into individual distributing pipes installed on the wide frame.

The chopper comprises blades which chop the manure and simultaneously prevent clogging of the distributing pipes. The chopper further collects solid waste such as rocks, wood and iron, which can be present in the manure in small amounts. Numerous distributing pipes are connected to the chopper, however, in absence of gas flow through said pipes is hampered. This was addressed by the solution described in patent SI 25841. The chopper itself comprises a housing or a frame and a core (a part of the distributing-chopping unit), which is installed in the said housing. All necessary maintenance, cleaning, lubrication and similar actions can only be performed if the chopper is open and access to the core is enabled. The access to the core is in known solutions allowed only by unscrewing the core and uninstalling it from the housing, which is a time-consuming and impractical work.

The technical problem, which is solved by the present invention, is providing a manure chopper with improved core that will allow simplified maintenance. It is further required that the improved chopper enables easy access to the blades for their maintenance and to plates that define manure flow.

### Prior art

Patent application EP3175696A1 describes a distributing device for liquid substances, such as manure, comprising: a distribution chamber, which distribution chamber is provided with at least one supply and a plurality of discharges for liquid substance; a rotor situated in the distribution chamber, said rotor being provided with at least one cutting blade displaceable along a number of discharges, to which distributing pipes can be connected. The chamber has its own drive for driving the rotor and a gas supply, which runs at least partially through the drive shaft.

Similarly, the solution described in patent EP 1 702 503 B1 the distributing chamber is provided with an air supply running on the rotor axis, on which the plate with blades is installed.

Patent FR2851482 discloses a distributing shopper having a hollow plate with blades, wherein the air supply is led into the said hollow plate. Each of the blades has an opening, which is in contact with the interior of the hollow plate in order to allow air flow.

All mentioned solutions have a common characteristic, namely, they do not address the problem of accessing the core and de-installation of the core from the housing.

### Description of the solution to the technical problem

Presently known solutions are based on screwing or otherwise installing the core into the chopper housing, which consequently means that removal of the core requires unscrewing numerous screws, which is time-consuming and impractical. The present invention solves these problems with an adjustable core, the width of which can be adjusted for easier installation and removal from the housing of the chopper for a manure distributor. The technical problem is solved as defined in independent claims, wherein preferred solutions are defined in dependent claims.

The essence of the present invention is in that the size of the core is adjustable along its width, as the core is designed as a two-part shape, wherein both parts are provided with suitably shaped corresponding parts that allow the core to compress (fold) or widen by pulling one part from the other. The core may be designed so that the first part is pushed into the second part, wherein the corresponding parts may have any shape and size. Alternatively, the corresponding parts may be shafts on which the cutting elements are installed. When the first part is being pulled from the second part, force of springs installed around the bolts that support each of the cutting elements on the outer side of the core has to be overcome. According to the preferred embodiment, a tool is needed for this action. Due to tension of said springs in the widened position, the latter has to be secured, which is achieved with at least two safety plates, suitable shaped locks or pins installed on opposite sides to ensure symmetry in position stabilization. In an alternative embodiment, the force of springs installed on each shaft is overcome, which compresses the springs and their position is fixed with at least one pin that upon installation prevents the spring from increasing the gap between two parts. When the compressed core is inserted in the housing of the chopper pins are removed on all four shafts. When the pin is removed, preferably with a dedicated tool, the spring returns into its normal state, which pushes both parts away from each other and pushes the cutting elements against the cutting plate.

In the widened state of the core, the chopper can operate. In order to ensure access to the core for maintenance, the core is accessed via the maintenance hatch on the housing of the chopper, wherein the safety plates, the locks or the pins are removed or unlocked, which causes movement of the first part into the second part and thus reduction of the core width, as the springs press both parts together. The complete assembly of the core is thus replaceable and removable from the drive part and from the cutting are inside the chopper housing without unscrewing, which enables faster and simplified maintenance of the cutting-distributing unit.

For changing the status of the core - from folded (for removal from the housing) to the widened (needed for operation) the above-mentioned tool is preferably used. Said tool has a shape that allows inserting the tool in the gap between both parts, which pushes the parts apart to allow correspondence with inlets for supplying the manure and at the same time allows locking of the position by inserting or activating the safety plate, the lock or the pin.

The chopper with the core according to a preferred embodiment comprises:
- the housing with the maintenance hatch,
- a distributing chamber inside the housing, wherein said distributing chamber has at least one inlet for the manure and a plurality of outlet openings to which distributing pipes of the manure distributor can be connected,
- two counter-cutting plates installed inside the housing, said counter-cutting plates having openings of any size, wherein said openings are positioned to correspond to said outlet openings,
- the core comprising:
   ∘ two parts shaped to correspond to each other, so that the first part can be inserted in the second part,
   ∘ cutting elements installed on the outer part of two opposite sides of the core, i.e., on each part of the two-part core, wherein the cutting elements are arranged to cover said outlet openings,
   ∘ springs, which support each of the cutting elements, wherein each spring is installed between the blade and the blade holder and/or around a bolt or any other element via which the blade is installed on the first or second part of the core, respectively, and
   ∘ an external air supply, which leads the air to the interior of the core with the blades through the area between shafts,
- and a drive for driving the core, so that it rotates.

The core according to a second embodiment comprises:
- two parts, wherein both parts have suitably shaped corresponding parts on the shafts on which cutting elements are installed, so that said two parts can be moved closer or farther from each other,
- a gap between said parts,
- blades installed on the outer part on two opposite sides of the core, i.e., on each part of the two parts, wherein the blades are arranged to cover the outlet openings of the chopper for the manure distributor,
- springs installed on each shaft, and
- an external air supply, which leads the air to the interior of the core with the blades through the area between shafts.

According to an alternative solution the chopper with the core according to the second preferred embodiment comprises:
- the housing with the maintenance hatch,
- a distributing chamber inside the housing, wherein said distributing chamber has at least one inlet for the manure and a plurality of outlet openings to which distributing pipes of the manure distributor can be connected,
- two counter-cutting plates installed inside the housing, said counter-cutting plates having openings of any size, wherein said openings are positioned to correspond to said outlet openings,
- the core comprising:
   ∘ two parts, which can be moved closer or farther from each other,
   ∘ cutting elements installed on the outer part of two opposite sides of the core, i.e., on each part of the two-part core, wherein the cutting elements are arranged to cover said outlet openings,
   ∘ shafts, which connect two opposite cutting elements, wherein each shaft is provided with a spring that can be compressed for the compressed state of the core or released for the widened state of the core, and
   ∘ an external air supply, which leads the air to the interior of the core with the blades through the area between shafts,
- and a drive for driving the core, so that it rotates.
In case the core should be removed, both parts of the core are compressed, this position is fixed with at least one pin, as described above.

In a preferred embodiment, each of the blades or the cutting elements is made from two metals or from a combination of metal with non-metal.

The chopper has a large maintenance hatch that allows easy cleaning of the distributor after use and cleaning due to clogging of the distributing pipes. An advantage of the large maintenance hatch is in that the core can be accessed, screwed or unscrewed, i.e., removed or installed through the opening. It also allows access to counter-blade plates, which can be removed and replaced if required.

In a preferred embodiment, the housing is provided with at least one slit for leading lubrication means from the exterior of the housing, wherein in case of lubrication the lubrication means is automatically spread due to movement of the core or the cutting elements.

In a further preferred embodiment, the housing has a water attachment, which allows supplying water into the interior of the chopper housing, thus enabling cleaning of the chopper without interference with the housing interior. Upon cleaning with water lubrication can be performed as described above.

The chopper according to the invention may be installed in any manure or liquid manure distributor in any known manner.

The invention will be further described based on exemplary embodiments and figures, which show:
- Figure 1: The core in a widened position
- Figure 2: The core in a compressed position
- Figure 3: Cross-section of the core
- Figure 4: The chopper with the maintenance hatch
- Figure 5: The chopper with removed maintenance hatch
- Figure 6: A tool for changing the status of the core (a) and the tool inserted into the core (b)
- Figure 7: the chopper with an external supply or a slit for a lubricant from the interior side of the housing (a) and from the external side of the housing (b)
- Figure 8: The core according to a second embodiment in a widened position
- Figure 9: Cross-section of the core shown in figure 8
- Figure 10: The chopper with a removed maintenance hatch and installed core shown in figure 8 in two positions

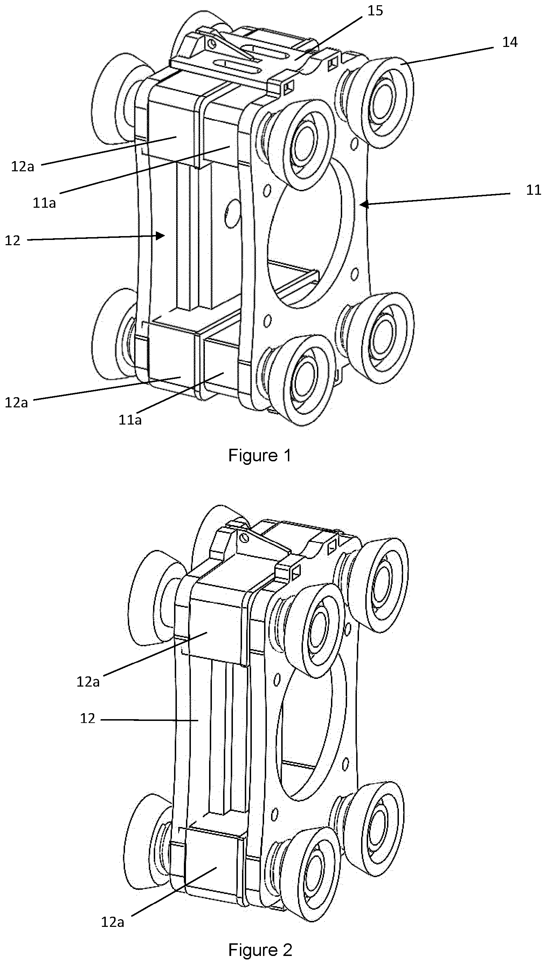

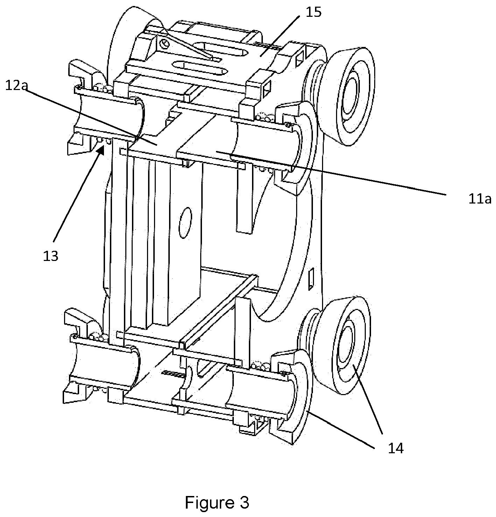

Figure 1 shows the core in a widened position, whereas figure 2 shows the core in the compressed (folded) position and figure 3 shows a cross-section of the said core. The core 1 has two parts 11 and 12, which have in their bottom and upper part corresponding parts 11a and 12a, so that the first part 11 can be pushed into the second part 12, thus folding the core 1, or the first part 11 is pulled out from the second part 12, thus widening the core 1. During pulling out of the first part 11 from the second part 12 force of the springs 13 has to be overcome. Said springs je 13 are installed between the blade and the carrier of the blade, around bolts, which support each of the blades 14 on the outer side of the core. Between both parts of the core a slot R is provided, which is arranged to receive a tool 2 for moving the core from the compressed state to the widened state. Due to tension of said springs in the widened position, the latter has to be safeguarded, which may be done with at least two safety plates 15 arrangeable on opposite sides, so that symmetry during position stabilization is ensured.

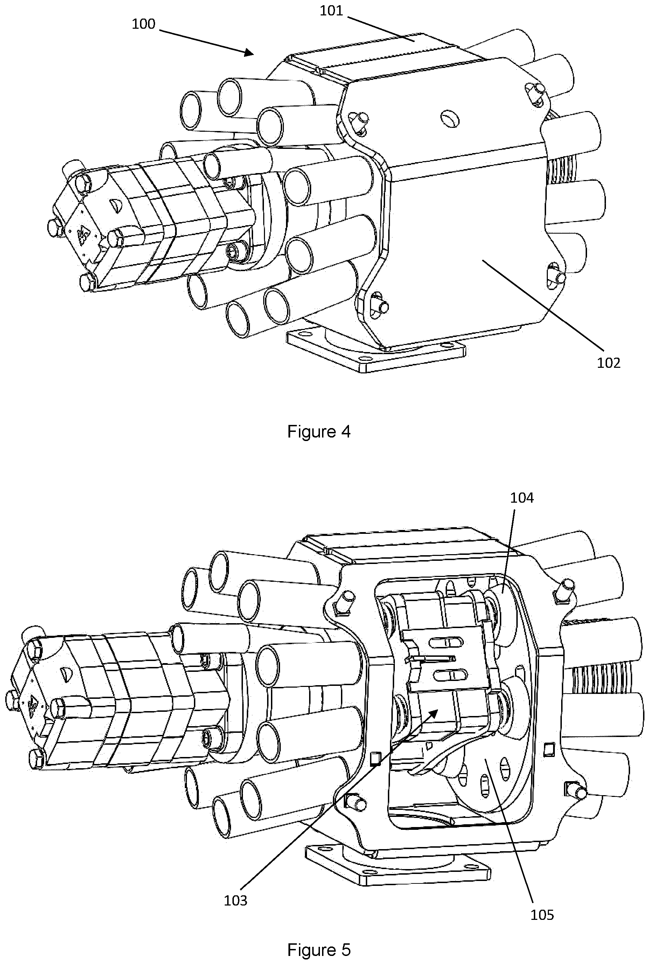

The core is a part of the chopper 100, which is shown in figures 4 and 5 and comprises:
- the housing 101 with the maintenance hatch or a cover 102,
- a distributing chamber inside the housing, wherein said distributing chamber has at least one inlet for the manure and a plurality of outlet openings to which distributing pipes of the manure distributor can be connected;
- two counter-cutting plates 105 installed inside the housing, said counter-cutting plates having openings of any size, wherein said openings are positioned to correspond to said outlet openings,
- the core 103 comprising:
   ∘ two parts shaped to correspond to each other, so that the first part can be inserted in the second part,
   ∘ cutting elements 104 installed on the outer part on two opposite sides of the core, i.e., on each part 11, 12 of the core 103, wherein the cutting element are arranged to cover the outlet openings,
   ∘ springs supporting each cutting element, wherein each spring is installed around a bolt or any other element via which the cutting element is installed on the first or second part of the core, respectively, and
   ∘ an external air supply, which leads the air to the interior of the core with the blades through the area between shafts,
- and a drive for driving the core, so that it rotates.

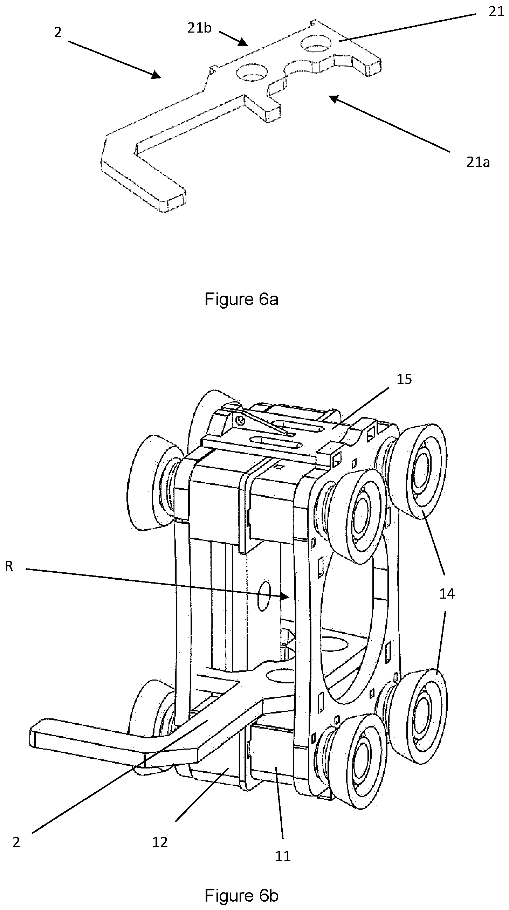

When the chopper is provided with the core, the latter is installed on the drive part and moved from the compressed state to the widened position using the tool shown in figure 6a. Said tool 2 is shaped as one piece shaped as an approximate shape L having an upper part 21, which is on both sides provided with suitable cut-outs 21a and 21b shaped as approximate letter U, which enable grip on at least one part of the core and their respective distancing. The tool is inserted between both parts of the core and turned into the position shown in figure 6b. By doing so a suitable distance between both parts is achieved, which allows insertion of the safety plate for fixing the widened position.

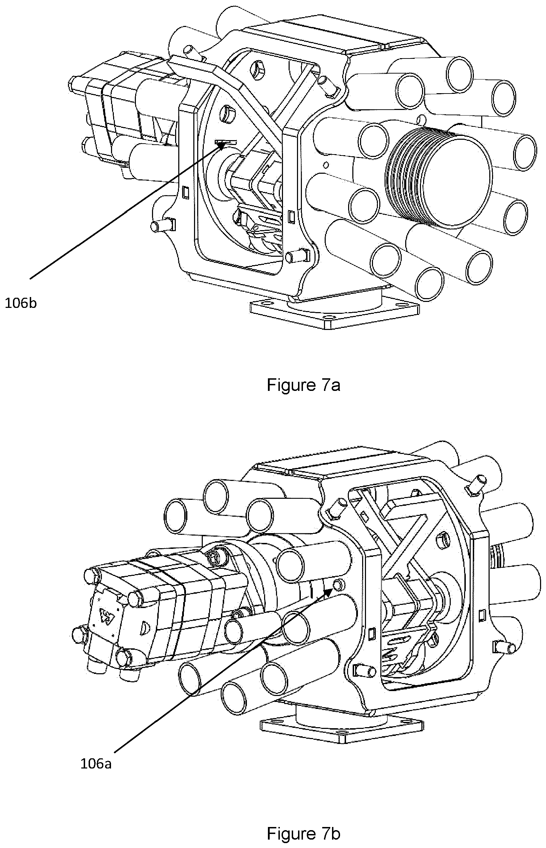

Preferably, the housing is provided with at least one slit or supply for supplying a lubricant from the exterior of the housing, wherein the lubricant is automatically distributed due to movement of the core or the cutting elements, respectively, as shown in figures 7a and 7b. From the external side of the housing a supply 106a or a connection for the lubricant is provided, while on the inner side the supply is shaped as a slit 106b near one of the blades.

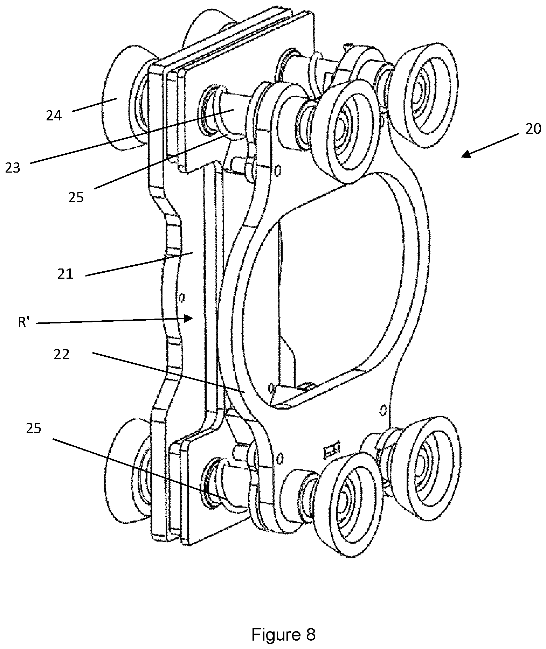

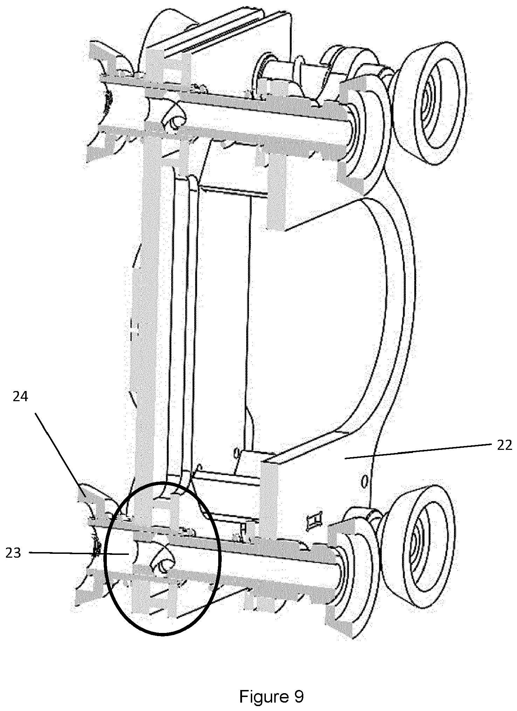

Figure 8 shows the core according to the second embodiment, comprising two parts installed at a distance ensured by springs installed on each of the cutting elements 14. Consequently, both parts can be moved closer or farther apart from each other, same as for the first embodiment. Shafts on which the cutting elements 14 are installed, are designed in a telescopic manner so that at least partly on part of the first shaft is pushed at least partially into the second shaft (circled part of figure 9). Two parts of the core may be compressed with a hand and a pin can be used to fix the compressed position, said pin preventing the spring to distance both parts. Upon installation of the compressed core into the housing of the chopper pins on all four shafts are removed. When the pins are removed, preferably with a dedicated tool, the springs return to their widened position, which pushes the two parts apart and the cutting elements are pushed against the cutting plate.

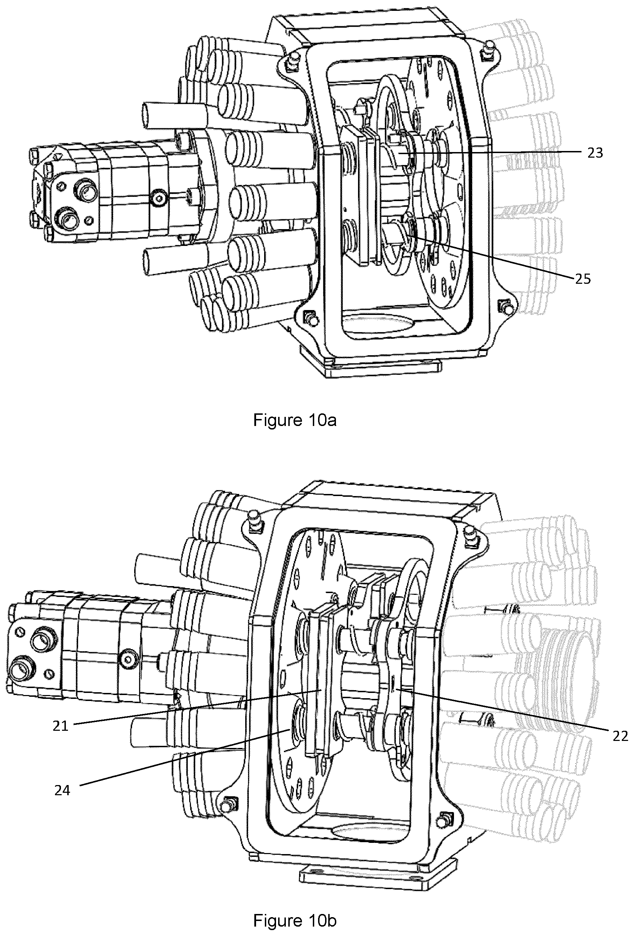

Figure 9 shows the core from figure 8 in a cross-section, wherein figures 10a and 10b show this core installed in the copper in the same manner as in figure 1, wherein its operation in the working (widened) position is the same as for the first embodiment.

## Claims

1. A core (1) for a chopper (100) for a manure distributor, **characterized in that** the core comprises two parts (11, 12) designed as corresponding pieces, so that the first part (11) is arranged to be inserted into the second part (12), thus folding the core (1), or the first part (11) is arranged to be pulled from the second part (12), thus widening the core (1), and at least two safety plates (15), suitably shaped locks or pins, which are arranged to be installed on opposite sides to secure the widened position of the core.

2. The core (1) according to claim 1, wherein the core comprises:
- two parts (11, 12), wherein both parts have suitably shaped corresponding parts (11a, 12a) on the upper and lower parts,
- a gap (R) between the two parts (11, 12),
- cutting elements (14) installed on an outer part on two opposite sides of the core (1), i.e., on each part (11, 12) of the core (1), wherein the cutting elements (14) are arranged to cover outlet openings of a chopper of a manure distributor,
- springs (13), which support each of the cutting elements (14), wherein each spring (13) is installed around a bolt or any other element via which the cutting element (14) is installed on the first (11) or the second part (12) of the core (1), and
- an external air supply, which leads the air to the interior of the core (1) with the blades (14) through the area between shafts.

3. The core (1) according to claim 2, wherein a tool (2) is used to move the core (1) from its compressed to widened state, said tool (2) having a shape arranged to fit in the gap (R) between both parts (11, 12) to push them apart so that the safety plates (15), the lock or the pin can be inserted or activated.

4. The core (1) according to the preceding claim, wherein said tool (2) is shaped as a single piece having a shape of approximal letter L, wherein in the upper part (21) suitable U-shaped cut-outs (21a,21b) are provided, which ensure gripping of at least one of the two parts (11, 12) of the core (1) and their distancing.

5. A core (20) for a chopper (100) for a manure distributor, **characterized in** the core (20) comprises:
- two parts (21, 22), wherein both parts have suitably shaped corresponding parts on shafts (23), on which cutting elements (24) are installed, so that both parts (21, 22) can be moved closer or farther one from another using a spring (25) installed on each shaft (23),
- a gap (R') between the two parts (21, 22),
- cutting elements (24) installed on an outer part on two opposite sides of the core (20), i.e., on each part (21, 22) of the core (20), wherein the cutting elements (24) are arranged to cover outlet openings of a chopper of a manure distributor, and
- an external air supply, which leads the air to the interior of the core with the blades through the area between shafts.

6. The core (1, 20) according to any of the preceding claims, **characterized in that** each of the blade (14) is made from two metals or from a combination of a metal and a non-metal.

7. A chopper for a manure distributor comprising the core (1, 20) according to any of the preceding claims.

8. The chopper (100) for a manure distributor according to the preceding claim, comprising:
- a housing (101) with a maintenance hatch (102),
- a distributing chamber inside the housing, wherein said distributing chamber has at least one inlet for the manure and a plurality of outlet openings to which distributing pipes of the manure distributor can be connected;
- two counter-cutting plates (105) installed inside the housing, said counter-cutting plates having openings of any size, wherein said openings are positioned to correspond to said outlet openings,
- the core (1, 103) comprising:
∘ two parts (11, 12) shaped to correspond to each other, so that the first part (11) can be inserted in the second part (12), and
∘ cutting elements (14, 104) installed on the outer part of two opposite core sides, i.e., on each part (11, 12) of the core (1, 103), wherein the cutting elements (14, 104) are arranged to cover the outlet openings,
∘ springs (13) supporting each cutting element, wherein each spring is installed around a bolt or any other element via which the cutting element is installed on the first or second part (11, 12) of the core, respectively, and
∘ an external air supply, which leads the air to the interior of the core with the blades through the area between shafts, and
- and a drive for driving the core, so that it rotates.

9. A chopper for a manure distributor according to claim 7, comprising:
- a housing with a maintenance hatch,
- a distributing chamber inside the housing, wherein said distributing chamber has at least one inlet for the manure and a plurality of outlet openings to which distributing pipes of the manure distributor can be connected;
- two counter-cutting plates installed inside the housing, said counter-cutting plates having openings of any size, wherein said openings are positioned to correspond to said outlet openings,
- the core (20) comprising:
∘ two parts (21, 22), which are arranged to move closer and farther to each other,
∘ shafts (23), which connect two opposite cutting elements (24), wherein each shaft is provided with a spring (25) that is arranged to be compressed for the compressed position of the core or released for the widened position of the core,
∘ cutting elements (24) installed on the outer part on two opposite core sides, i.e. on each part (21, 22) of the core, wherein the cutting elements (24) are arranged to cover the outlet openings,
∘ an external air supply, which leads the air to the interior of the core with the blades through the area between shafts, and
∘ and a drive for driving the core, so that it rotates.

10. A chopper for a manure distributor according to claim 8 or claim 9, which is provided with at least one slot or supply (106a) for leading lubrication means from the exterior of the housing, wherein during supply of lubricating means the lubricant is automatically distributed due to movement of the core or the cutting means.

11. A manure distributor comprising the core and/or the chopper according to any of the preceding claims.
